# FASCICULE DE BREVET EUROPEEN

(11) **EP 1 048 688 B1**
(45) Date de publication et mention de la délivrance du brevet: **02.07.2003**
(21) Numéro de dépôt: 00450003.9
(22) Date de dépôt: 27.04.2000
(51) Int. Cl.: C08K 5/42, B29C 33/64

(54) **Procédé de protection contre la corrosion par les produits chimiques de membranes souples en silicone auto-demoulant**
Verfahren zum Schützen von Formtrennmitteln auf Basis von flexiblen Silikonmembranen gegen Korrosion von chemischen Produkten
Process for protecting flexible silicone mold release membranes against corrosion of chemical products

(30) Priorité: 28.04.1999 FR 9905564
(43) Date de publication de la demande: 02.11.2000
(73) Titulaire: AIRBUS FRANCE, 31060 Toulouse (FR)
(72) Inventeur: Fournier, Alain, 31470 Saint Lys (FR); Aumont, Cristophe, 31860 Pins Justaret (FR)
(74) Mandataire: Thébault, Jean-Louis

(56) Documents cités:
- EP-A- 0 384 800
- US-A- 5 344 909
- PATENT ABSTRACTS OF JAPAN vol. 006, no. 157 (M-150), 18 août 1982 (1982-08-18) & JP 57 072750 A (AISIN CHEM CO LTD), 7 mai 1982 (1982-05-07)
- PATENT ABSTRACTS OF JAPAN vol. 009, no. 028 (C-264), 6 février 1985 (1985-02-06) & JP 59 172541 A (SUMITOMO BAKELITE KK), 29 septembre 1984 (1984-09-29)

## Description

La présente invention concerne un procédé de protection de membranes souples en silicone bi-constituants, plus particulièrement les membranes souples en silicones auto-démoulants, notamment dans le cas de la mise en oeuvre de moulages par transfert de résine.

Un silicone bi-constituants a la formule générale suivante lorsqu'il est obtenu par polyaddition :

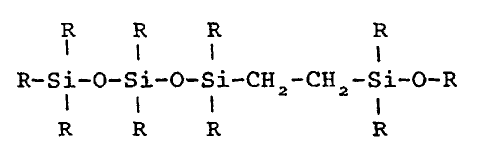

Le moulage par transfert de résine consiste à préparer des formes ayant des faces en vis à vis générant un volume au profil de la pièce à réaliser, à disposer sur les parois de ce volume une membrane souple en silicone pour permettre le démoulage de la pièce finie et à injecter dans l'espace délimité par ladite membrane de la résine et son catalyseur de polymérisation. Les parois du moule peuvent être chauffantes afin de maîtriser mieux encore la réaction de polymérisation.

Ce procédé est très utilisé dans l'industrie automobile et dans le domaine des sports et loisirs. Ce procédé permet d'obtenir de meilleures performances techniques, de réduire les cycles de fabrication.

Réservé initialement à des pièces de petites dimensions, ce procédé tend à se généraliser et à trouver des applications y compris pour la fabrication de pièces de structures de grandes dimensions comme dans le domaine de l'aéronautique.

De plus, les résines injectées sont de type phénolique et présentent des avantages particulièrement intéressants dans ce domaine de l'aéronautique car elles sont auto-extinguibles et la fumée dégagée, en faible volume, n'est pas nocive.

Chaque résine est livrée avec son catalyseur et on connaît plus particulièrement l'un d'entre eux qui contient de l'acide para-toluène sulfonique.

Ce catalyseur est bien connu pour cette propriété vis à vis de certaines résines mais il présente par contre des inconvénients vis à vis de la santé car il s'agit d'un acide irritant mais surtout pouvant s'avérer nocif aux températures d'utilisation, en plus d'être un agent coûteux.

La membrane souple en silicone auto-démoulant, quant à elle, présente de nombreuses qualités qui sont essentielles pour la bonne mise en oeuvre du procédé. Il n'y a pas d'usinage, elle est facile à démouler puisqu'il suffit de tirer sur la membrane pour la "peler" par rapport à la pièce et l'état de surface de la pièce obtenue est excellent.

Par contre, cette membrane présente un inconvénient important : au contact de la résine et plus particulièrement des groupes phénol, la membrane se corrode. Cette corrosion a pour effet de dégrader l'état de surface et d'en accentuer le phénomène au fur et à mesure des utilisations successives.

Ce vieillissement prématuré fait perdre à la membrane toutes ses qualités de démoulage et conduit, par conséquent, à diminuer la qualité d'état de surface de la pièce. Ce fait oblige l'utilisateur à procéder au remplacement fréquent de la membrane, remplacement qui est donc préjudiciable à la rentabilité du procédé de moulage par transfert de résine.

L'objet de l'invention est de proposer un procédé de fabrication d'une pièce à l'aide d'une membrane en silicone auto-démoulant permettant d'éviter la dégradation prématurée et d'augmenter ainsi le potentiel d'utilisation. Ce procédé doit permettre de conserver les qualités de démoulage, le bon état de surface de la pièce réalisée, ce qui va de pair généralement, en évitant d'augmenter de façon substantielle les épaisseurs.

A cet effet, l'invention porte sur un procédé de fabrication d'une pièce en résine notamment par moulage à l'aide d'une membrane en silicone auto-démoulant, l'une au moins desdites résines comportant des groupes susceptibles de présenter une action dommageable sur ladite membrane, notamment de corrosion, procédé qui se caractérise en ce que l'on réduit le temps de polymérisation de ladite résine en sorte qu'elle polymérise rapidement après son introduction dans le moule pour bloquer l'action desdits groupes.

Dans le cas d'au moins une résine comprenant des groupes phénols, le catalyseur choisi dans la famille des acides sulfoniques est de l'acide méthane sulfonique.

La quantité de catalyseur retenue est de l'ordre de 1 partie en poids pour 100 parties en poids de résines.

Le solvant utilisé est aqueux et la température de travail est inférieure à 95°C.

La présente invention est maintenant décrite en détail.

On a noté qu'une des explications possibles de cette corrosion pouvait être l'action des groupes phénol de la résine sur une des molécules de la membrane souple en silicone.

L'équation chimique simplifiée d'une telle réaction peut s'écrire de la façon suivante :

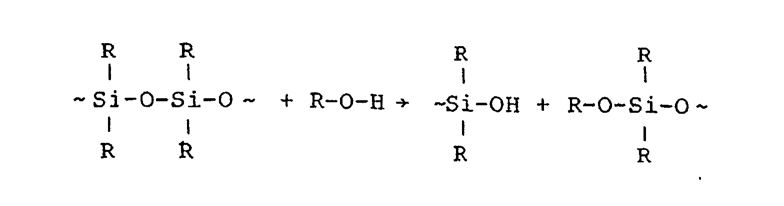

On note la rupture de la chaîne silicone qui marque la dégradation de la membrane souple au cours du temps car la réaction n'est pas immédiate.

Le catalyseur acide permet l'amorce de la dégradation par la rupture de la chaîne des groupes silicones et malheureusement, il accélère la dégradation des membranes pendant le temps de polymérisation de la résine phénolique.

En effet, le processus de corrosion est maximal lorsque la résine est encore liquide car les groupes phénol peuvent diffuser à la surface de la membrane.

On note ainsi une forte diminution des capacités de démoulage de la membrane qui devient, au fur et à mesure des utilisations, de plus en plus difficile à décoller de la pièce, ce qui engendre simultanément une dégradation de l'état de surface de ladite pièce.

La dégradation est initiée sur des zones limitées et se propage rapidement à la totalité de la surface de la membrane.

Des statistiques montrent que ces membranes permettent environ une douzaine d'utilisations.

Une première solution consiste à supprimer le pouvoir agressif de l'alcool (phénol) en le remplaçant mais on a énuméré ci-avant les bonnes raisons dont l'industrie dispose pour utiliser les résines phénoliques, tout spécialement en aéronautique.

Une autre solution consiste à disposer un produit barrière sur la membrane pour éviter cette agression comme cela est décrit dans la demande de brevet français N° 99 02382 au nom du même demandeur.

Une autre voie consiste à diminuer le pouvoir agressif du catalyseur mais les résultats obtenus ont été peu probants et les possibilités de modification sont relativement réduites car il faut lui conserver ses qualités premières d'initiateur et d'entretien de la réaction de polymérisation.

La solution selon la présente invention consiste à diminuer le temps de contact du monomère et de son catalyseur avec la membrane. Ainsi, la réaction étant bloquée très rapidement, l'action des groupes phénol (alcool) est très vite neutralisée. De plus, en diminuant les temps de cycles, on peut augmenter le nombre de ces cycles et diminuer les temps de fabrication.

A cet effet, le procédé de fabrication propose d'utiliser un catalyseur dont la vitesse de polymérisation engendrée au contact des résines phénoliques est supérieure à celle de l'acide para-toluène sulfonique.

C'est ainsi que dans la famille des acides sulfoniques apparue comme particulièrement adaptée, l'acide méthane sulfonique est, de façon surprenante, une sélection très judicieuse. Cet acide est commercialisé par exemple sous la référence AMS 2690 par la société Elf Atochem. Cet acide permet d'accélérer considérablement la réaction de polymérisation, ce qui diminue le temps de contact des groupes phénol libres au sein des résines phénoliques, avec la membrane en silicone auto-démoulant.

Ce catalyseur, tel que commercialisé, provoque d'ailleurs une réaction trop rapide qui, dans certains cas, peut perturber le remplissage des moules par les résines et qui dissuadait de l'utiliser. Il faut donc ajuster la quantité de catalyseur pour obtenir les effets voulus sans nuire au bon remplissage des moules.

Un tel catalyseur présente aussi l'avantage de ne pas être nocif pour les utilisateurs à la température d'utilisation et il est beaucoup moins coûteux, ce qui permet des gains sur le produit final.

L'acide méthane sulfonique est aussi avantageux car son solvant est aqueux et peut-être simplement de l'eau. Or on sait que ce solvant est peu coûteux. De plus, il possède une température d'ébullition assez élevée pour ne pas se vaporiser lors de la réaction exothermique de polymérisation, même au pic exothermique.

On sait aussi que la résine phénolique contient de l'eau, ce qui permet cette compatibilité.

Par dilution, on peut ainsi contrôler la cinétique de la réaction de polymérisation. La dilution permet aussi de réaliser une bonne homogénéisation du mélange avant introduction dans le moule, ce qui évite les disparités.

Une bonne proportion de catalyseur est de 1 partie en poids de catalyseur pour 100 parties en poids de mélange de résines.

La température de fabrication des pièces est généralement comprise entre 60 et 95°C, ce qui est tout à fait compatible avec l'utilisation du catalyseur retenu de la famille des acides sulfoniques. En effet, le point d'ébullition est situé au-delà ce qui évite les émanations et la décomposition chimique de ce produit. On note que ces seuils ne sont donnés qu'à titre indicatif et la limite basse peut être abaissée à 40°C pour d'autres conditions de mise en oeuvre.

La dilution doit être adaptée avec deux limites extrêmes :
- la limite basse est une absence de dilution car la réaction est quasi-instantanée, donc trop rapide et elle peut conduire au bouchage des orifices du moule, et
- une dilution trop importante susceptible de former des micro-bulles au cours de l'élévation de température engendrée par la réaction de polymérisation. De plus, l'excès d'eau peut jouer un rôle de plastifiant dans la structure de la résine.

On sait que la mise en oeuvre du moulage par transfert de résine est coûteux car ce dernier nécessite des investissements lourds comme des machines d'injection équipées de moyens de chauffage, des postes de travail, des outillages chauffants, des outillages permanents comme les formes métalliques et des outillages renouvelables comme les contre-formes que sont les membranes souples en silicone auto-démoulant.

Il est donc très intéressant de pouvoir conserver les membranes pour le plus grand nombre possible d'applications successives en limitant les effets de corrosion en recourant au procédé qui consiste à diminuer la durée d'action de corrosion.

## Revendications

1. Procédé de fabrication d'une pièce en résine notamment par moulage à l'aide d'une membrane en silicone auto-démoulant, l'une au moins desdites résines comportant des groupes susceptibles de présenter une action dommageable sur ladite membrane, notamment de corrosion, **caractérisé en ce que** l'on réduit le temps de polymérisation de ladite résine en sorte qu'elle polymérise rapidement après son introduction dans le moule pour bloquer l'action desdits groupes.

2. Procédé de fabrication d'une pièce en résine par moulage selon la revendication 1, **caractérisé en ce que** dans le cas d'au moins une résine comprenant des groupes phénols, le catalyseur choisi dans la famille des acides sulfoniques est de l'acide méthane sulfonique.

3. Procédé de fabrication d'une pièce en résine par moulage selon la revendication 2, **caractérisé en ce que** la quantité de catalyseur est de l'ordre de 1 partie en poids pour 100 parties en poids de résines.

4. Procédé de fabrication d'une pièce en résine par moulage selon la revendication 3, **caractérisé en ce que** le solvant utilisé est aqueux.

5. Procédé de fabrication d'une pièce en résine par moulage selon l'une quelconque des revendications précédentes, **caractérisé en ce que** la température de travail est inférieure à 95°C.

## Patentansprüche

1. Verfahren zur Herstellung eines Harzteils insbesondere durch Gießen mit Hilfe einer selbstabstreifenden Silikonmembran, wobei wenigstens eines der Harze Gruppen umfaßt, die eine schädliche Wirkung auf die Membran haben können, insbesondere eine Korrosion, **dadurch gekennzeichnet, daß** die Polymerisationszeit des Harzes verringert wird, damit es nach seiner Einführung in die Gießform schnell polymerisiert, um die Wirkung dieser Gruppen zu blockieren.

2. Verfahren zur Herstellung eines Harzteils durch Gießen nach Anspruch 1, **dadurch gekennzeichnet, daß** in dem Fall, in dem wenigstens ein Harz Phenolgruppen enthält, der in der Familie der Sulfosäuren gewählte Katalysator Methan-Sulfosäure ist.

3. Verfahren zur Herstellung eines Harzteils durch Gießen nach Anspruch 2, **dadurch gekennzeichnet, daß** die Menge des Katalysators in der Größenordnung von 1 Gewichtsanteil pro 100 Gewichtsanteilen der Harze liegt.

4. Verfahren zur Herstellung eines Harzteils durch Gießen nach Anspruch 3, **dadurch gekennzeichnet, daß** das verwendete Lösungsmittel wäßrig ist.

5. Verfahren zur Herstellung eines Harzteils durch Gießen nach einem der vorhergehenden Ansprüche, **dadurch gekennzeichnet, daß** die Arbeitstemperatur niedriger als 95 °C ist.

## Claims

1. A method of manufacturing a resin piece in particular by moulding by means of a membrane made from silicone with inherent mould-release properties, at least one of said resins comprising groups liable to exhibit a detrimental action on said membrane, in particular a corrosive action, **characterised in that** the polymerisation time of said resin is reduced so that it polymerises rapidly after it is introduced into the mould in order to block the action of said groups.

2. A method of manufacturing a resin piece by moulding according to Claim 1, **characterised in that**, in the case of at least one resin comprising phenol groups, the catalyst chosen from the family of sulphonic acids is methane sulphonic acid.

3. A method of manufacturing a resin piece by moulding according to Claim 2, **characterised in that** the quantity of catalyst is around 1 part by weight per 100 parts by weight of resins.

4. A method of manufacturing a resin piece by moulding according to Claim 3, **characterised in that** the solvent used is aqueous.

5. A method of manufacturing a resin piece by moulding according to any one of the preceding claims, **characterised in that** the working temperature is below 95°C.
